**Europäisches Patentamt**

**European Patent Office**

**Office européen des brevets**

(19)

(11) Veröffentlichungsnummer: **0 129 054**
**A1**

(12) # EUROPÄISCHE PATENTANMELDUNG

(21) Anmeldenummer: **84105461.2**

(22) Anmeldetag: **14.05.84**

(51) Int. Cl.³: **G 11 C 17/00**

(30) Priorität: **18.05.83 DE 3318123**

(43) Veröffentlichungstag der Anmeldung:
**27.12.84 Patentblatt 84/52**

(84) Benannte Vertragsstaaten:
**AT DE FR GB IT SE**

(71) Anmelder: **Siemens Aktiengesellschaft**
**Berlin und München Wittelsbacherplatz 2**
**D-8000 München 2(DE)**

(72) Erfinder: **Schrenk, Hartmut, Dr., Phys.**
**Fasanenweg 22**
**D-8013 Haar(DE)**

(54) **Schaltungsanordnung mit einem Datenspeicher und einer Ansteuereinheit zum Auslesen, Schreiben und Löschen des Speichers.**

(57) Um die Speichereigenschaften eines elektrisch löschba-ren, programmierbaren Datenspeichers (8) ("lesbar", "lösc-hbar", "schreibbar") auf einfache Weise flexibel an unters-chiedliche Anforderungen anzupassen, weist die Schaltung-sanordnung einen Funktionsdatenspeicher (5) auf, dessen Speicherzellen über einen Adreßdekoder (4) gemeinsam mit den Speicherzellen des Datenspeichers (8) adressierbar sind. Die Ausgänge des Funktionsdatenspeichers (5) sind über eine Verknüpfungseinheit (6) mit einer Ansteuerschaltung (2, 7) zum Schreiben, Lesen, und Löschen des Datenspeichers (8) verbunden. Abhängig von der Programmierung des Funk-tionsdatenspeichers (5) wird die Wirksamkeit eines Lösc-hsignals (LOE), eines Schreibsignals (SCHR) und/oder eines Lesesignals (LES) aufgehoben.

FIG 1

EP 0 129 054 A1

SIEMENS AKTIENGESEllSCHAFT      Unser Zeichen
Berlin und München              VPA 82 E 2137 c

                                83 P 1345 E

**Schaltungsanordnung mit einem Datenspeicher und einer Ansteuereinheit zum Auslesen, Schreiben und Löschen des Speichers**

Die Erfindung betrifft eine Schaltungsanordnung, bestehend aus einem Datenspeicher mit nichtflüchtigen, elektrisch schreib- und löschbaren Speicherzellen, aus einem Adreßdekoder und aus einer Ansteuereinheit zum Auslesen, Schreiben und Löschen von Teilbereichen des Speichers.

Aus der Zeitschrift "Electronics" ist ein Zeilen und spaltenweise adressierbarer Datenspeicher bekannt, welcher über eine Ansteuerschaltung elektrisch auslesbar, beschreibbar und löschbar ist. Die Speicherbeschreibung wurde von W.S. Johnson, G.L. Kuhn, A.L. Renninger und D. Perlegos unter dem Titel: "16-kEE-PROM relies on tunneling for byte-erasable program storage" im Heft February 28, 1980, Seite 113 ff. veröffentlicht. Es gibt jedoch Anwendungen für einen derartigen Speicher, bei welchen es wünschenswert ist, neben einem bezüglich der Funktionseigenschaften uneingeschränkten Adreßbereich auch Speicherbereiche mit eingeschränkten Funktionseigenschaften zur Verfügung zu haben. Diese Forderung besteht beispielsweise dann, wenn der Speicher in datengesteuerten Zahlungssystemen zum bargeldlosen Bezahlen von Waren oder zum Abrechnen von Dienstleistungen und ähnlichem eingesetzt ist. Zahlungssysteme dieser Art sind in der Zeitschrift "Betriebspraxis", B.BL. 2/1982, S. 48 ff. von Dr. R.Novak und W. Roeder unter dem Titel "Die Chipkarte - nächste Generation der Automatenkarte" beschrieben. Die dabei verwendeten Karten tragen als ein wesentliches Element einen

Lg 1 Kth / 17.5.1983

nichtflüchtigen elektrischen Datenspeicher, auf den über
elektrische Kontakte an der Kartenoberfläche zugegriffen
werden kann. Über ein Kartenlesegerät wird von einer Recheneinheit bei jedem Gebrauch auf den Speicherinhalt zugegriffen , der dabei gegebenenfalls geändert wird.

Zur Anwendung kommen derartige Karten in Sicherheits- und
Zugriffssystemen, in Abrechnungs- oder Registriersystemen
und in Debit- oder Kreditsystemen. Um eine weite Verbreitung und häufigen Gebrauch der Karten zu gewährleisten,
gibt es Betreiber solcher Systeme, die eine Vielzahl von
Karten ausgeben, und die ein weitverzweigtes Netz von
Lesegeräten und Rechenanlagen anbieten. Um Mißbräuche
der Daten auszuschließen, müssen hohe Sicherheitsforderungen an die Kartensysteme gestellt werden. Besonders
die Trägerkarten, deren Verbreitung nicht immer kontrollierbar ist, müssen vor einer Benutzung durch Unberechtigte geschützt werden.

Dies kann durch eine Freigabeoperation erreicht werden,
bei welcher ein Datenvergleich zwischen einem von einer
Bedienungsperson eingegebenen oder von einer Rechenanlage
verschlüsselten Code-Wort mit einem abgespeicherten Referenzwort durchgeführt wird, und abhängig vom Vergleichsergebnis der Zugriff freigegeben bzw. unterbunden wird.
Während der Freigabeoperation soll einerseits der Zugriff
auf einen vorbestimmten Adreßbereich des Speichers möglich sein, aber andererseits der Zugriff auf einen mit
geheimen oder zu schützenden Daten belegten Anwenderdatenbereich gesperrt sein.

Dabei kann abhängig vom Anwendungsfall des Speichers ein
Löschen, Beschreiben oder Auslesen des Anwenderdatenbereichs ohne erfolgreiche Durchführung der Freigabeoperation
unterbunden sein. Ein weiterer Speicherbereich, der zur Aufnahme der geheimen Referenzdaten dient, kann darüberhinaus unter allen Umständen gegen Auslesen in ein extern auslesbares Register geschützt sein.

Zur Zwischenspeicherung von Daten, die während der Freigabeoperation enstehen, kann ein dritter Speicherbereich mit variierbaren oder zustandsabhängigen Zugriffssperren versehen sein. Eine Freigabeoperation, welche beispielsweise einen Datenvergleich und ein davon abhängiges Beschreiben und gegebenenfalls Löschen dieses dritten Speicherbereichs erfordert, wird folglich abhängig vom Verlauf der Freigabeoperation nacheinander mit einer Schreib- und Löschsperre beaufschlagbar sein, die nur bei ordungsgemäßem Ablauf der Freigabeoperation aufhebbar sind.

Die optimale Aufteilung eines Speichers in Bereiche unterschiedlicher Eigenschaften hängt von der Anwendung selbst und von den jeweiligen Sicherheitsanforderungen ab. Der Erfindung lag daher die Aufgabe zugrunde, eine Schaltungsanordnung der oben genannten Art anzugeben, mit welcher auf einfache Weise eine flexible Anpassung der Speichereigenschaften an die gewünschten Anforderungen möglich ist.

Diese Aufgabe wird durch einen Funktionsdatenspeicher gelöst, dessen Speicherzellen gemeinsam mit den Speicherzellen des Datenspeichers adressierbar sind, und durch eine Verknüpfungseinheit über welche der Funktionsdatenspeicher ausgangsseitig mit der Ansteuerschaltung verbunden ist.

Auf diese Weise wird eine Adreßabhängigkeit der Funktionseigenschaften "lesbar", "schreibbar", und "löschbar" des Datenspeichers erreicht. Durch eine Programmierung des Funktionsdatenspeicherss werden also Speicherbereiche des Datenspeichers festgelegt, welche beispielsweise die Eigenschaften eines elektrisch löschbaren, programmierbaren Speichers (EEPROM), eines programmierbaren Speichers
(PROM) oder eines Nur-Lesespeichers (ROM) aufweisen.

Weiterbildungen der Erfindung ergeben sich aus den Unteransprüchen.
Im folgnden wird die Erfindung anhand eines Ausführungsbeispiels weiter beschrieben.

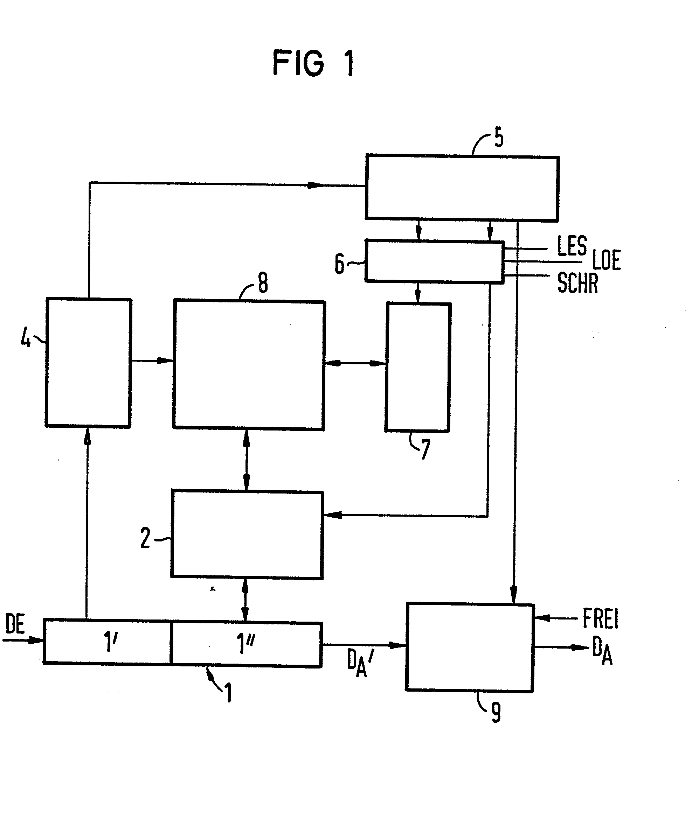

Fig. 1 zeigt ein Blockschaltbild der Schaltungsanordnung
Fig. 2 zeigt beispielhaft Einzelheiten der Schaltungsanordnung nach Fig. 1
Fig. 3 zeigt für eine beispielhafte Belegung des Funktions
        datenspeichers in tabellarischer Form die Funktions-
        eigenschaften von Speicherbereichen des Datenspei-
        chers nach den Fig. 1 und 2.

Die monolithisch integrierbare Schaltungsanordnung in Fig.
1 ist beispielsweise zur Verwendung in einem bargeldlosen
Zahlungssystem, wie es eingangs beschrieben ist auf einer
Trägerkarte aufgebracht. Über je eine Dateneingangs- und
Datenausgangsleitung DE und DA erfolgt ein serieller Datenaustausch mit einer nicht wiedergegebenen Recheinheinheit. Die binär kodierten Bitfolgen werden dabei von einem Register 1, bestehend aus einem Adreßregister 1' und
einem Datenregister 1'', aufgenommen. Eine auf die Datenausgangsleitung DA wirkende Auslesesperre 9 macht das
Auslesen von Daten aus dem Register 1 von einem Ausgangssignal eines Funktionsdatenspeichers 5 und von einem Freigabesignals FREI abhängig. Dieses wird nach der erfolgreichen Durchführung einer Freigabeoperation, d.h. nach dem
Vergleich von eingegebenen Code und abgespeicherten Referenzdaten, in einer nicht wiedergegebener Prüfschaltung
erzeugt.

Mit 8 ist ein zeilen- und spaltenweise adressierbarer Datenspeicher mit nichtflüchtigen, elektrisch schreib- und löschbaren Speicherzellen bezeichnet. Die Adressierung erfolgt über einen Adreßdekoder 4, welcher eingangsseitig mit dem Adreßregister 1' verbunden ist. Ein zeilen- und spaltenweise organisierter Funktionsdatenspeicher 5 wird ebenfalls vom Adreßdekoder 4 gemeinsam mit dem Datenspeicher 8 adressiert.

Dabei wird über eine Bitfolge im Adreßregister 1' ein erster Speicherbereich im Datenspeicher 8, beispielsweise zur Aufnahme eines Datenwortes, zusammen mit einem zweiten Speicherbereich im Funktionsdatenspeicher 5, der zur Aufnahme von ein oder mehreren Bits ausgebildet sein kann, adressiert. Der Inhalt des zweiten Speicherbereichs bestimmt über eine Verknüpfungseinheit 6 inwieweit ein Lese-, Schreib- oder Löschsignal LES, SCHR, LOE wirksam werden. Über den Inhalt des Funktionsdatenspeichers ist somit der entsprechende Speicherplatz im Datenspeicher 8 bezüglich seiner Speichereigenschaften festgelegt.

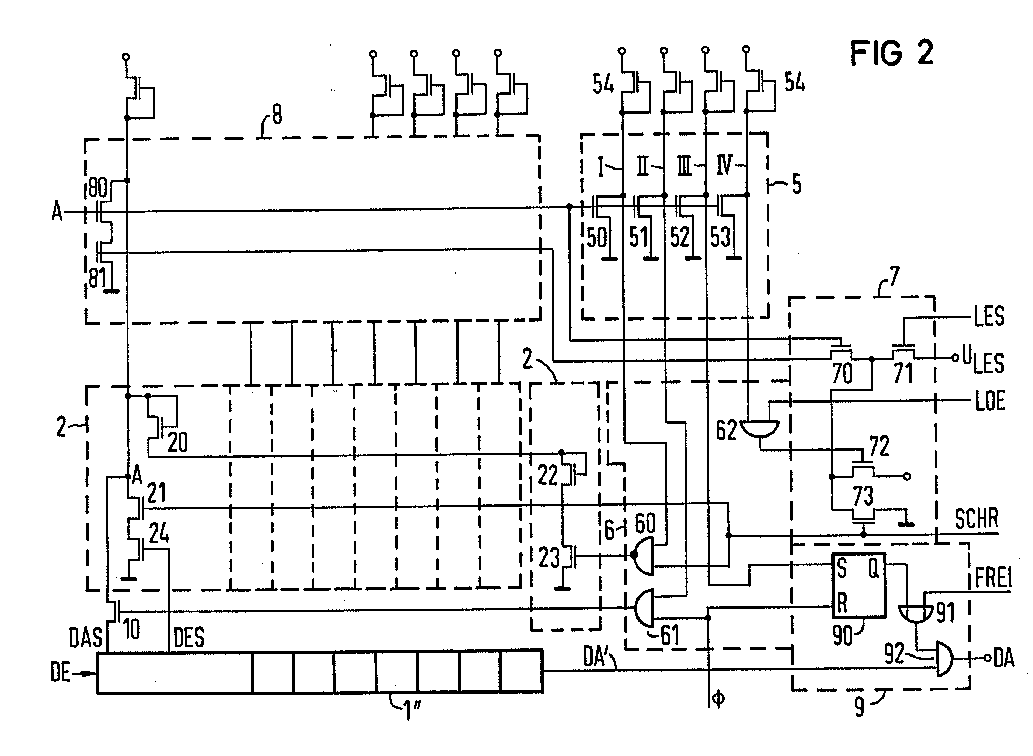

Wie Fig. 2 zeigt, besteht der Datenspeicher 8 aus zeilen- und spaltenweise geordneten Speicherzellen mit jeweils einem Auswahl-MOS-FET 80 und einem Speicher-MOS-FET 81. Alle Steuereingänge der Auswahl-MOS-FET 80 einer Zeile sind jeweils über eine Adreßleitung A mit dem Adreßdekoder 4 verbunden. Die Speicher-MOS-FETs 81 sind über Programmierleitungen von der Zeilensteuerung 7 ansteuerbar. Die Spaltenleitungen zum Schreiben bzw. Auslesen der Speicherzellen sind über die hintereinander geschalteten gesteuerten Strecken der Auswahl-MOS-FETs 80 und der Speicher-MOS-FETs 81 mit einem niederen Bezugspotential von beispielsweise 0 V verbunden. In Hinsicht auf eine übersichtliche Darstellung sind lediglich eine Speicherzelle des Datenspeichers 8 und die dazugehörige Adreßleitung, Programmierleitung und Spaltenleitung in der Figur wiedergegeben.

Der Zugriff auf den Datenspeicher 8 erfolgt über eine Ansteuerschaltung 2,7 , bestehend aus einer Spaltensteuerung 2 und einer Zeilensteuerung 7.

Um eine Speicherzelle zu löschen, wird der Signalpegel einer Programmierzeile auf ein hohes Bezugspotential, beispielsweise 20 V,erhöht und die dazugehörende Spaltenleitung mit dem niederen Bezugspotential verbunden. Das Beschreiben einer Speicherzelle erfolgt dadurch, daß die Programmierzeile mit dem niederen Bezugspotential beaufschlagt und die Spaltenleitung mit einem dem abzuspeichernden Datenmuster entsprechenden Signalpegel beaufschlagt wird. In der Figur sind die zur Ansteuerung des Speichers 7 benötigten Pegelwandler nicht eingezeichnet.

Die Spaltensteuerung 2 besteht bezüglich einer jeden Spaltenleitung aus einem als Diode wirkenden Ansteuerungs-MOS-FET 20 und weiteren MOS-FETs 21, 24. Die MOS-FETs 20 verbinden jeweils eine Spaltenleitung mit einem gemeinsamen Verbindungspunkt, welcher über einen als Spannungsteiler dienenden MOS-FET 22 mit der gesteuerten Strecke eines MOS-FET 23 verbunden ist.

Dessen gesteuerte Strecke ist ebenso wie die gesteuerte Strecke der MOS-FET's 21 mit der Verknüpfungseinheit 6 verbunden.

Zum parallelen Einschreiben eines Datenwortes in den Datenspeicher 8 sind für jede Spaltenleitung Dateneingangsleitungen DES vorgesehen, über welche jeweils ein MOS-FET 24 ansteuerbar ist. Jeder MOS-FET 11 verbindet die gesteuerte Strecke des zugeordneten MOS-FET 21 mit dem niederen Bezugspotential.

Außerhalb der Spaltensteuereinheit 2 ist jede Spaltenleitung über die gesteuerte Strecke eines MOS-FET 10 mit einer Datenausgangsleitung DAS verbunden, die zum Datenregister 1'' führt. Über mehrere Datenausgangsleitungen DAS ist ein Datenwort aus dem Speicher 8 parallel in das Datenregister 1'' übertragbar.

Die Zeilensteuerung 7 besteht aus MOS-FET's 70,71,72, 73. Dazu ist zu bemerken, daß einer jeden Zeile des Datenspeichers 8 ein dem MOS-FET 70 entsprechender Transistor zugeordnet ist, während die MOS-FET's 71,72, 73 über einen gemeinsamen Verbindungspunkt allen Zeilen gemeinsam zugeordnet sind.

Der MOS-FET 70 wird über die Adreßleitung A angesteuert, sobald die entsprechende Zeile des Datenspeichers 8 adressiert ist. Abhängig von einem Lese-Lösch- oder Schreibsignal LES, LOE, SCHR, wird der gemeinsame Verbindungspunkt über einen der MOS-FETs 71, 72 bzw. 73 mit einer Lesespannung $U_{LES}$, dem hohen Bezugspotential bzw. dem niederen Bezugspotential verbunden.

Der Funktionsdatenspeicher 5 ist in dem Ausführungsbeispiel der Fig. 2 als maskenprogrammierbarer Speicher ausgeführt. Die Speicherzellen sind zeilen- und spaltenweise organisiert, wobei jeweils eine Zeile vier Speicher-MOS- FETs 50, 51 52, 53 aufweist. Jeweils einer dieser MOS- FETs ist einer ersten, zweiten, dritten bzw. vierten Spaltenleitung I, II, III, bzw. IV zugeordnet, die jeweils eingangsseitig über einen Last-MOS-FET 54 mit dem hohen Bezugspotential und ausgangsseitig mit der Verknüpfungseinheit 6 verbunden sind.

Die gesteuerten Strecken der Speicher-MOS-FETs 50, 51, 52, 53 verbinden abhängig von der Speicherprogrammierung die zugeordnete Spaltenleitung mit dem niederen Bezugspotential. Ist aufgrund der Programmierung die gesteuerte Strecke eines oder mehrerer Speicher-MOS-FET's unterbrochen, so gilt die entsprechende Speicherzelle als gelöscht (Löschpegel log.1).

Ist der Funktionsdatenspeicher 5 beispielsweise ebenso wie der Datenspeicher 8 als elektrisch löschbarer, programmierbarer Speicher ausgebildet, so besteht jede Speicherzelle aus einem Adressier-MOS-FET und einem Speicher- MOS-FET, deren gesteuerte Strecken hintereinandergeschaltet die zugeordnete Spaltenleitung mit dem niederen Bezugspotential verbinden (nicht darstellt).

Die Steuereingänge der Speicher-MOS-FET's 50, 51, 52, 53 - im Fall eines maskenprogrammierbaren Speichers - bzw. der Adressier-MOS-FETs im Fall eines elektrisch löschbaren, programmierbaren Speichers sind in dem wiedergegebenen Beispiel wie der Datenspeicher 8 ebenfalls zeilenweise mit der Adressleitung A verbunden. Somit ist eine direkte Zuordnung des ersten Speicherbereichs im Datenspeicher 8 und des zweiten Speicherbereichs im Funktionsdatenspeicher 5 hergestellt.

Die Verknüpfungseinheit 6 besteht aus einem NAND-Glied 60 und UND-Gliedern 61,62. Das UND-Glied 62 verbindet die Spaltenleitung IV und die mit dem Löschsignal LOE beaufschlagte Leitung mit dem Steuereingang des MOS-FET 72.

Die Spaltenleitung II ist mit allen Steuereingängen der MOS-FET's 10 verbunden. Das NAND-Glied 60 liegt vor dem Steuereingang des MOS-FET's 23. An seinem Eingang liegt die erste Spaltenleitung I und die Leitung mit dem Schreibsignal SCHR. Die Spaltenleitung III führt auf den Setzeingang eines Flipflops 90. In der Auslesesperre 9 ist der Ausgang Q des Flip-Flops 90 zusammen mit einer Leitung, die mit dem Freigabesignal FREI beaufschlagbar ist, an ein ODER-Glied 91 gelegt. Dessen Ausgang führt zusammen mit der Datenausgangsleitung DA' auf ein UND-Glied 92, welches ausgangsseitig mit der Datenausgangsleitung DA verbunden ist.

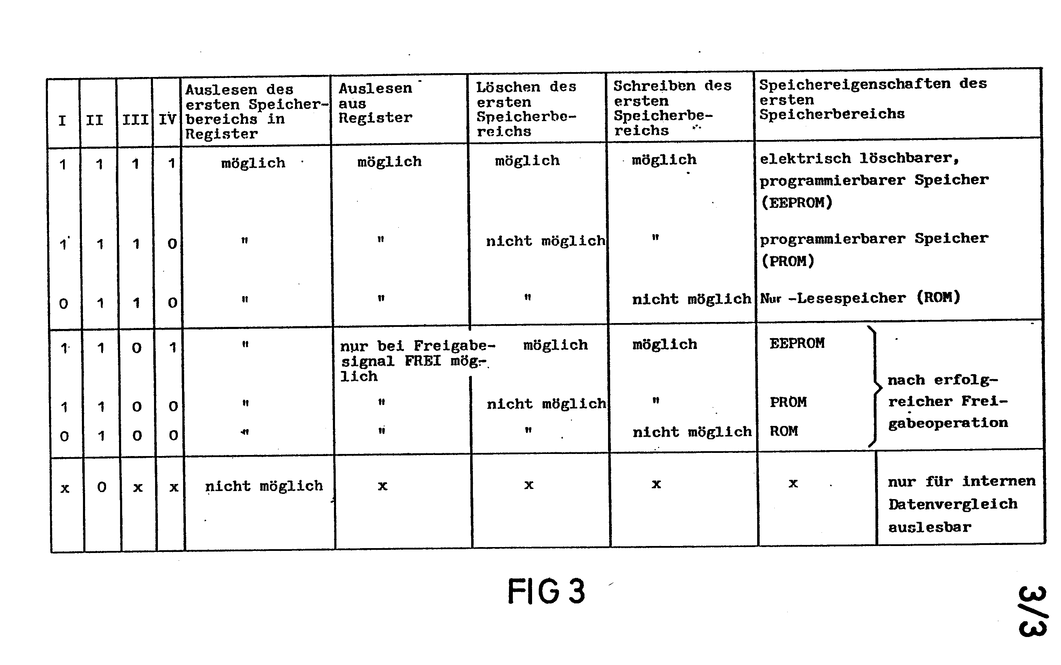

Im folgenden sind die Funktionen der Schaltung zusammen mit der Tabelle in Fig. 3 beschrieben. Im ersten Drittel der Tabelle sind mehrere Beispiele für Kombinationen der logischen Werte 1 oder 0 auf den Spaltenleitungen I, II, III,IV des Funktionsdatenspeichers 5 aufgetragen. Zu jeder Kombination ist in der Übersicht ferner angegeben, ob und gegebenenfalls unter welchen Bedingungen ein Auslesen, Löschen oder Beschreiben des jeweils adressierten ersten Speicherbereichs des Datenspeichers 8 möglich ist. Aus der letzten Spalte der Tabelle sind Bezeichnungen für Speicher mit unterschiedlichen Speichereigenschaften zu entnehmen, die dem jeweils adressierten Speicherbereich aufgrund der Programmierung des zweiten Speicherbereichs eingeprägt sind.

Ist der Funktionsdatenspeicher 5 als Nur-Lesespeicher (ROM) ausgebildet, so bedeutet eine "1" in der Tabelle, daß an dem entsprechenden Speicherplatz kein leitender Transistor 50 vorgesehen ist. Eine "0" bedeutet, daß die entsprechende Spaltenleitung mit einem Transistor 50 versehen ist, der über die Adreßleitung A angesteuert ist.

Wenn es sich bei dem Funktionsdatenspeicher 5 um einen elektrisch löschbaren, programmierbaren Speicher (EEPROM) handelt, so bedeutet eine "1" bzw. "0", daß der entsprechende Speicherplatz im Funktionsdatenspeicher 5 gelöscht bzw. geschrieben ist.

Über die erste Spaltenleitung I wird für alle Speicherlätze des Datenspeichers 8 die Speichereigenschaft bezüglich einer Schreiboperation festgelegt. Hat der Signalpegel auf der ersten Spaltenleitung I den logischen Wert 1, so kann über das NAND-Glied 60 ein Schreibsignal SCHR bezüglich der angewählten Adresse des Datenspeichers 8 wirksam werden. Dabei ist der MOS-FET 23 gesperrt und die Spannungsbegrenzung der Spaltenleitung im Speicherfeld des Datenspeichers 8 ist aufgehoben. Ein Beschreiben einer adressierten Speicherzelle, deren Löschpegel logisch 1 ist, erfolgt dann, wenn auf der zugehörigen Dateneingangsleitung DES ein logischer Pegel 0 abgreifbar ist, welcher den MOS-FET 11 sperrt.

Ist der Funktionsdatenspeicher 5 als Nur-Lesespeicher ausgebildet, und weist er unter der angewählten Adresse einen leitenden MOS-FET 50 auf, so liegt der Ausgang des NAND-Gliedes 60 unabhängig vom Schreibsignal SCHR, immer auf dem logischen Wert 1. Somit ist der MOS-FET 23 ständig durchgeschaltet und die Schreibspannung auf der Spaltenleitung des Datenspeichers 8 kann nicht den erforderlichen Wert erreichen.

Über die zweite Spaltenleitung II im Funktionsdatenspeicher 5 ist festlegbar, ob die Speicherinhalte der adressierten Speicherzellen des Datenspeichers 8 gegebenenfalls in das Datenregister 1'' auslesbar sind. Liegt auf der zweiten Spaltenleitung II am UND-Glied 62 ein logischer Wert 1, so sind die MOS-FETs 10 leitend, wenn gleichzeitig ein Setzsignal 0 aktiv ist. Ist dagegen der Signalpegel auf der Spaltenleitung II logisch 0, so sind die Datenaus-

gangsleitungen DAS unabhängig von O durch die MOS-FETs 10 unterbrochen. Das Signal O ist vor jedem Auslesevorgang Übernahme der Daten aus dem Datenspeicher 8 in das Datenregister 1'' erforderlich. Der letztgenannte Fall kann dann von Bedeutung sein, wenn ein erster Speicherbereich des Datenspeichers 8 beispielsweise Referenzdaten enthält, die zum Vergleich mit von außen eingegebenen Codeaten vorgesehen sind. Die Referenzdaten müssen zwar im Rahmen der Freigabeoperation verfügbar sein, sie dürfen jedoch gegebenenfalls aus Geheimhaltungsgründen nicht - auch nicht nach einer erfolgreichen Freigabeoperation - nach außen gelangen. Für einen internen Datenvergleich ist der Speicherinhalt des Datenspeichers 8 vor den MOS-FETs 10 jeweils an einem Abzweigepunkt A an jeder Spaltenleitung abgreifbar.

Die dritte Spaltenleitung III dient dazu, das Auslesen von Speicherzellen des Datenspeichers 8 unabhängig von einer Freigabeoperation zu gewährleisten. Unter der Annahme, daß eine derartige Freigabeoperation vorgesehen ist, hat ein Freigabesignal FREI den logischen Wert 1, wenn die Freigabeoperation erfolgreich durchgeführt ist. Über die dritte Spaltenleitung III wird das Flip-Flop 90 gesetzt, wenn der Signalpegel auf der Spaltenleitung III den logischen Wert 1 annimmt. Dann weist der Ausgang Q des Flip-Flops 90 ebenfalls den logischen Wert 1 auf, was zur Folge hat, daß das UND-Glied 92 vom NOR-Glied 91 mit dem logischen Wert 1 beaufschlagt ist. Somit ist das UND-Glied 92 unabhängig vom Freigabesignal FREI für eine Bitfolge auf der Datenausgangsleitung DA' leitend, und das Register 1 ist ohne Einschränkung auslesbar. Das Setzsignal O kann dagegen das Flip-Flop 90 zurücksetzen und damit die Datenausgabe vom Freigabesignal FREI abhängig machen, wenn die Spaltenleitung III auf logisch O liegt.

Über die vierte Spaltenleitung IV wird die Eigenschaft des Datenspeichers 8 bezüglich einer Löschoperation festgelegt. Ist unter der angewählten Adresse ein leitender MOS-FET 53 nicht vorhanden, so liegt auf der vierten Spaltenleitung IV ein Signal des logischen Wertes 1, und das Löschsignal LOE hat über das UND-Glied 62 Einfluß auf den Steuereingang des MOS-FET 72.

9 Ansprüche

3 Figuren

Patentansprüche

1. Schaltungsanordnung, bestehend aus einem Datenspeicher mit nichtflüchtigen, elektrisch schreib- und löschbaren Speicherzellen, aus einem Adreßdekoder, und aus einer Ansteuereinheit zum Auslesen, Schreiben und Löschen von Teilbereichen des Datenspeichers, g e k e n n z e i c h n e t durch einen Funktionsdatenspeicher (5), dessen Speicherzelle gemeinsam mit den Speicherzellen des Datenspeichers (8) adressierbar sind, und durch eine Verknüpfungseinheit (6), über welche der Funktionsdatenspeicher (5) ausgangsseitig mit der Ansteuerschaltung (2,7) verbunden ist.

2. Schaltungsanordnung nach Anspruch 1, d a d u r c h g e k e n n z e i c h n e t, daß der Funktionsdatenspeicher (5) als elektrisch löschbarer, programmierbarer Speicher ausgebildet ist.

3. Schaltungsanordnung nach Anspruch 1, d a d u r c h g e k e n n z e i c h n e t, daß der Funktionsdatenspeicher (5) als maskenprogrammierbarer Nur-Lesespeicher ausgebildet ist.

4. Schaltungsanordnung nach einem der Ansprüche 1 bis 3, d a d u r c h g e k e n n z e i c h n e t, daß einer oder mehreren Adressen im Datenspeicher (8) eine Adresse im Funktionsdatenspeicher (5) zugeordnet ist.

5. Schaltungsanordnung nach Anspruch 4, d a d u r c h g e k e n n z e i c h n e t, daß einerjeder Adresse im Funktionsdatenspeicher (5) zweite Speicherbereich vier Speicherplätze zugeordnet sind, die über Spaltenleitungen (I,II,III,IV) auslesbar sind.

6. Schaltungsanordnung nach Anspruch 5, d a d u r c h g e k e n n z e i c h n e t, daß eine erste Spaltenlei-

tung (I) so verschaltet ist, daß über ein Signal auf der
ersten Spaltenleitung (I) ein zur Ansteuerschaltung (2,
7) geleitetes Schreibsignal (SCHR) unterdrückbar ist.

7. Schaltungsanordnung nach Anspruch 5 oder 6,   d a -
d u r c h   g e k e n n z e i c h n e t,   daß eine
zweite Spaltenleitung (II) so verschaltet ist, daß über
ein Signal auf der zweiten Spaltenleitung (II) ein zur
Ansteuerschaltung (2,7) geleitetes Lesesignal (LES) unterdrückbar ist.

8. Schaltungsanordnung nach einem der Ansprüche 5 bis 7,
d a d u r c h   g e k e n n z e i c h n e t,   daß eine
dritte Spaltenleitung (III) so mit einer auf ein Register (1) wirkenden Auslesesperre (9) verschaltet ist,
daß diese unabhängig von einem Freigabesignal (FREI) aufhebbar ist.

9. Schaltungsanordnung nach einem der Ansprüche 5 bis 8,
d a d u r c h   g e k e n n z e i c h n e t,   daß eine
vierte Spaltenleitung (IV) so verschaltet ist, daß über
ein Signal auf der vierten Spaltenleitung (IV) ein zur
Ansteuerschaltung (2,7) geleitetes Löschsignal (LOE)
unterdrückbar ist.

FIG 1

FIG 2

2/3

0129054

| I | II | III | IV | Auslesen des ersten Speicherbereichs in Register | Auslesen aus Register | Löschen des ersten Speicherbereichs | Schreiben des ersten Speicherbereichs | Speichereigenschaften des ersten Speicherbereichs | |
|---|---|---|---|---|---|---|---|---|---|
| 1 | 1 | 1 | 1 | möglich | möglich | möglich | möglich | elektrisch löschbarer, programmierbarer Speicher (EEPROM) | |
| 1 | 1 | 1 | 0 | " | " | nicht möglich | " | programmierbarer Speicher (PROM) | |
| 0 | 1 | 1 | 0 | " | " | " | nicht möglich | Nur -Lesespeicher (ROM) | |
| 1 | 1 | 0 | 1 | " | nur bei Freigabe-signal FREI mög-lich | möglich | möglich | EEPROM | nach erfolg-reicher Frei-gabeoperation |
| 1 | 1 | 0 | 0 | " | " | nicht möglich | " | PROM | |
| 0 | 1 | 0 | 0 | " | " | " | nicht möglich | ROM | |
| x | 0 | x | x | nicht möglich | x | x | x | x | nur für internen Datenvergleich auslesbar |

# FIG 3

Europäisches
Patentamt

**EUROPÄISCHER RECHERCHENBERICHT**

**0129054**
Nummer der Anmeldung

EP 84 10 5461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | PATENTS ABSTRACTS OF JAPAN, Band 3, Nr. 121, 11. Oktober 1979, Seite 6 E 143; & JP - A - 54 98124 (HITACHI SEISAKUSHO K.K.) 08.02.1979 * Zusammenfassung * | 1 | G 11 C 17/00 |
| A | idem | 3,4,6, 7 | |
| Y | US-A-4 247 918 (TOKYO SHIBAURA) * Spalte 3, Zeile 20 - Spalte 5, Zeile 22; Figur 3 * | 1 | |

| RECHERCHIERTE SACHGEBIETE (Int. Cl. ³) |
|---|
| G 11 C 17/00 |
| G 11 C 11/34 |
| G 11 C 7/00 |

Der vorliegende Recherchenbericht wurde für alle Patentansprüche erstellt.

| Recherchenort | Abschlußdatum der Recherche | Prüfer |
|---|---|---|
| DEN HAAG | 19-09-1984 | DEGRAEVE L.W.G. |